# EUROPEAN PATENT SPECIFICATION

(11) **EP 3 464 853 B1**
(45) Date of publication and mention of the grant of the patent: **05.05.2021**
(21) Application number: 17731352.5
(22) Date of filing: 02.06.2017
(51) Int. Cl.: F02C 6/12, F01D 25/24

(54) **INSERT PIECE FOR A BYPASS IN A TURBINE HOUSING**
EINSATZSTÜCK FÜR EINEN BYPASS IN EINEM TURBINENGEHÄUSE
PIÈCE D'INSERTION POUR UN DÉRIVATION DANS UN CARTER DE TURBINE

(30) Priority: 07.06.2016 DE 102016210016
(43) Date of publication of application: 10.04.2019
(73) Proprietor: BorgWarner Inc., Auburn Hills, MI 48326 (US)
(72) Inventor: OBENAUER, Maik, Auburn Hills Michigan 48326 (US)
(74) Representative: Peterreins Schley
(86) International application number: PCT/US2017/035645
(87) International publication number: WO 2017/213983

(56) References cited:
- WO-A1-2014/078109
- DE-A1-102006 024 782
- DE-A1-102010 013 702
- DE-A1-102010 062 403

## Description

### Field of the Invention

The present invention relates to an insert piece for a bypass in a turbocharger turbine housing, a turbine housing arrangement, a turbocharger, as well as a method for manufacturing a turbine housing arrangement.

### Background of the invention

An increasing number of the latest generation of vehicles are being equipped with turbochargers. Known turbochargers feature a turbine housing, a compressor housing, and a bearing housing, which is usually connected on the turbine side to the turbine housing and on the compressor side to the compressor housing. Supported within the bearing housing is a shaft, which bears the turbine wheel and the compressor wheel. Arranged within the turbine housing is a turbine wheel, which is driven by the flow of engine exhaust gas when the turbocharger is in operation. In embodiments, the turbine housing may feature a bypass, which is designed to route exhaust gas past the turbine wheel. Such bypasses may feature so-called inserts or insert pieces arranged within the bypass. The insert pieces can, for example, serve for routing the flow of exhaust gas, and feature a contact area for a flap, which serves for opening and closing the bypass. Depending on the operating condition, the flap is opened or closed in order to route the flow of exhaust gas (or portions thereof) past the turbine wheel. In known turbochargers, the insert piece is first installed in the turbine housing during the final assembly of the turbocharger. As a result, the insert piece may become lost or be incorrectly installed.

DE102010013702A1 relates to a turbine for an exhaust gas turbocharger, in particular for a motor vehicle. The turbine has a turbine casing and a wastegate valve. The wastegate valve comprises a wastegate flap which controls a quantity of exhaust gas flowing through the wastegate valve, and which has a wastegate bushing which is positioned at least in sections in an opening, formed by the wastegate valve in the turbine housing. The wastegate bushing serves as a valve seat for the wastegate flap. The wastegate bushing and the turbine housing are directly connected to one another in a positive and/or non-positive manner. The document further relates to an exhaust gas turbocharger with such a turbine, a motor vehicle with such an exhaust gas turbocharger and a method for mounting such a turbine. A further prior art turbocharger is disclosed in WO 2014/078109 A1.

Therefore, the object of the present invention is to provide an insert piece for a turbine housing or a turbocharger as well as a corresponding turbine housing arrangement in order to solve the problems described above.

### Summary of the invention

The present invention relates to an insert piece for a bypass of a turbocharger turbine housing according to claim 1, a turbine housing arrangement according to claim 7, a turbocharger according to claim 14, and a method for manufacturing a turbine housing arrangement according to claim 15.

The insert piece according to the invention for a bypass in a turbine housing features a connecting flange and a tubular portion. The connecting flange is suitable for joining the insert piece with a turbine housing. The tubular portion is designed so that exhaust gas can be routed through the insert piece. The connecting flange furthermore comprises a retainer fitting. The connecting flange is designed in the form of an annular ring, and the retainer fitting is provided in the form of a conical circumferential surface on the connecting flange. An advantage of an insert piece according to the invention is that the insert piece can no longer be lost during transport. In addition, delivery can be made with the insert piece already installed in the turbine housing. Furthermore, there are assembly benefits for the customer as well as easier handling for the customer. In addition, given that it can be installed directly at the place of manufacture, the manufacturer of the turbine housing/insert piece can better verify the correct installation of the insert piece in the turbine housing. As a result, fewer problems will result from potentially incorrect installation by the customer.

In embodiments, the retainer fitting can be configured as a geometric element, in particular in the area of the edge of the connecting flange. This is advantageous because no additional components need to be provided, installation is made easier, and the manageability of the assembly consisting of the turbine housing and the insert piece is improved.

In embodiments, which may be combined with all of the embodiments described thus far, an angle α is formed between the circumferential surface of the connecting flange and a line parallel to a longitudinal axis passing through the tubular portion, said angle measuring between 0.1 degrees and 5 degrees, in particular between 0.5 degrees and 2 degrees, and preferably between 0.8 degrees and 1.2 degrees.

In embodiments, which may be combined with all of the embodiments described thus far, the connecting flange may have a thickness D of between 1 mm and 7 mm, in particular of between 3 mm and 5 mm, and preferably of between 3.5 mm and 4.5 mm.

In embodiments, which may be combined with all of the embodiments described thus far, the connecting flange may furthermore comprise an anti-rotation fitting. An advantage of an anti-rotation fitting is that the insert piece will no longer be able to rotate within the turbine housing following pre-assembly, during transport, and prior to the final assembly of the turbine housing. An anti-rotation fitting will likewise prevent rotation of the insert piece during operation. The anti-rotation fitting can be provided in the form of at least one flattened area along the circumference of the connecting flange, in particular in the form of at least three flattened areas along the circumference of the connecting flange. An anti-rotation fitting of this kind is advantageous because it represents a very simple solution without the need for additional components, such as locking pins.

In embodiments, not claimed by the present invention, which may be combined with all of the embodiments described thus far, a first lateral surface of the connecting flange can be suitable for interacting with a contact area in a turbine housing. In particular, the tubular portion can project out from this lateral surface.

In embodiments, not claimed by the present invention, which may be combined with all of the embodiments described thus far, a first end of the tubular portion can be provided with a peripheral contact area used for a regulating flap, and the connecting flange can be arranged on a second end of the tubular portion. The first end of the tubular portion can also be formed at an oblique angle. In particular, the first end is formed at an oblique angle such that an angle β of less than 90 degrees is formed between the plane along which the contact area lies and the longitudinal axis.

The following advantages are made possible with the insert piece according to the invention: without using additional components, both the loss of and the rotation of the insert piece will be prevented in a simple manner. This saves both time and cost, because the customer only has to install a single part, and the manufacturer only has to send a single part. Furthermore, given that the insert piece will remain in its correctly installed position following the installation process, this also ensures that the insert piece will perform its function inside the turbine housing.

The invention furthermore includes a turbine housing arrangement for a turbocharger having a turbine housing that features a bypass. The bypass is suitable for routing exhaust gas past a turbine wheel. Arranged within the bypass is an insert piece according to any of the previously described embodiments.

In embodiments of the turbine housing arrangement, the edge of a passage opening can be designed in order to interact with the connecting flange. In particular, the edge with the retainer fitting can interact with the connecting flange. The edge of the passage opening can feature an undercut. In particular, the undercut can be dimensioned to correspond with the conical circumferential surface of the connecting flange. The undercut can, for example, define a funnel-shaped area that interacts with the conical circumferential surface of the connecting flange. The undercut can also define a contact area that interacts with a lateral surface of the connecting flange.

In embodiments of the turbine housing arrangement, which can be combined with all previously described embodiments, the edge of the passage opening can feature at least one non-rotating fitting as a counterpart to the non-rotating fitting on the connecting flange. In particular, the passage opening can feature along its edge a number of corresponding flattened areas to conform with the number of flattened areas on the connecting flange.

In embodiments of the turbine housing arrangement, which can be combined with all previously described embodiments, a fit between the largest inner diameter ID1 of the passage opening and the largest outer diameter AD of the connecting flange may have at least 0.001 mm of clearance, and in particular at least 0.002 mm of clearance.

In embodiments of the turbine housing arrangement, which can be combined with all previously described embodiments, a fit between the smallest inner diameter ID2 of the passage opening and the largest outer diameter AD of the connecting flange may have an overmeasure of at least 0.1 mm, and in particular an overmeasure of at least 0.15 mm

The invention furthermore includes a turbocharger having a turbine housing arrangement according to any of the previously described embodiments.

The invention additionally includes a method for manufacturing a turbine housing arrangement. The method includes the following steps: Manufacturing and/or providing a turbine housing having a bypass that features a passage opening; manufacturing and/or providing an insert piece according to any of the embodiments described heretofore; heating the turbine housing and/or cooling the insert piece; placing the insert piece into the passage opening in the bypass.

In a further embodiment not claimed by the present invention, the method may furthermore include: creating an undercut on the edge of the passage opening prior to heating the turbine housing. In particular, the turbine housing can be heated and/or the insert piece cooled so that the temperature difference between the turbine housing and the insert piece is at least 300°C, in particular at least 340°C, and preferably at least 346°C.

Additional details and features of the invention are described in reference to the following drawings.

### Brief Description of the Drawings

- **Figure** 1: shows a side view of a turbocharger housing arrangement having a turbine housing;
- **Figure** 2: shows a section view of a turbine housing arrangement according to the invention having an inventive insert piece according to an embodiment;
- **Figure 3**: shows a side view and a top view as well as a detail enlargement of an inventive insert piece according to an embodiment;
- **Figure 4**: shows a section view and a top view as well as an enlargement of a bypass in an inventive turbine housing arrangement according to an embodiment.

### Detailed Description

With the aid of the drawings, embodiments for the inventive insert piece 100 for a bypass in a turbine housing 200, a corresponding turbine housing arrangement, and a corresponding manufacturing method will be described as follows.

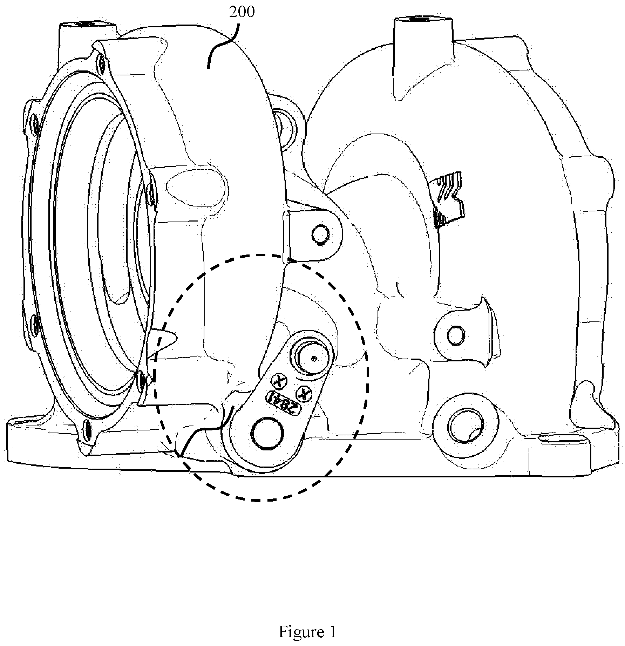

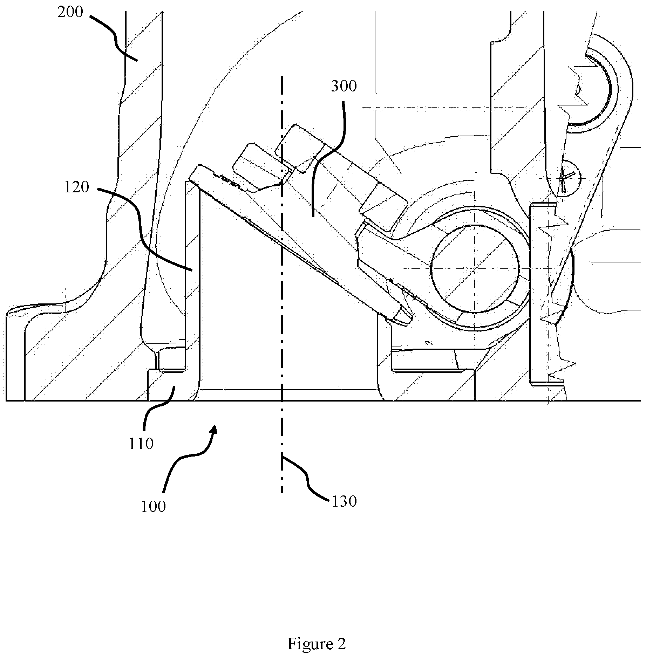

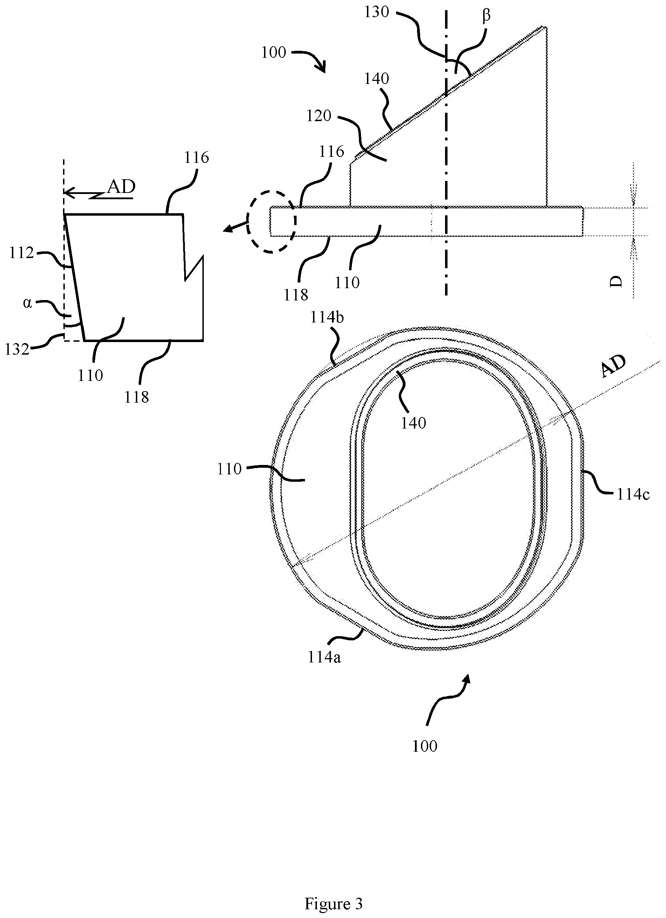

**Fig. 1** shows the housing of a turbocharger. The turbine housing 200 is located on the left side. Located in the circled area is the portion of the turbine housing in the interior of which a bypass is arranged. Depending on the operating condition of the turbocharger and the engine load and/or RPM, the bypass can be opened or closed using a flap 300 (see **Fig. 2**)**.** An appropriate lever used for a flap of this kind is evident in the circled area **in** **Fig. 3****.**

**Fig. 2** shows a portion of a section view looking through the interior of the turbine housing 200 (approximately from the area circled in **Fig. 1**) . The turbine housing comprises a bypass for routing exhaust gas past a turbine wheel (not shown). The insert piece 100 according to the invention is arranged in the bypass. The insert piece 100 features a connecting flange 110 and a tubular portion 120. The connecting flange 110 is suitable for joining the insert piece 100 with the turbine housing 200. The tubular portion 120 is designed so that exhaust gas can be routed through the insert piece 100 (and therefore through the bypass). The connecting flange 110 furthermore comprises a retainer fitting. An advantage of an insert piece 100 of this kind is that the insert piece 100 can no longer be lost during the transport of the assembly consisting of the turbine housing 200 and the insert piece 100. In addition, delivery can be made with the insert piece 100 already installed in the turbine housing 200. Furthermore, there are assembly benefits for the customer as well as easier handling for the customer. It is likewise advantageous that the manufacturer of the turbine housing/insert piece is better able to verify the correct installation of the insert piece 100 in the turbine housing 200. As a result, fewer problems will result from the potentially incorrect installation of the insert piece 100 in the turbine housing 200 by the customer.

The retainer fitting, which in the example shown is designed as a geometric element on the edge of the connecting flange 110, will be described in reference to **Fig. 3****.** As is evident in the side view and the top view of the insert piece 100 in **Fig. 3****,** the connecting flange 110 is designed in the form of an annular ring. The retainer fitting is provided in the form of a conical surface 112 on the connecting flange 110. This is easily recognizable in the enlarged detail view of the edge of the connecting flange 110 at the left of **Fig. 3****.** The advantage of a retainer fitting designed in this way is that no additional components need to be provided, installation is made easier, and the manageability of the assembly consisting of the turbine housing 200 and the insert piece 100 is improved.

As the enlarged detail in **Fig. 3** shows, an angle α is formed between the circumferential surface 112 of the connecting flange 110 and a line 132 parallel to a longitudinal axis 130 passing through the tubular portion 120. The width of the angle α formed may measure between 0.1 degrees and 5 degrees, in particular between 0.5 degrees and 2 degrees, and preferably between 0.8 degrees and 1.2 degrees. Also marked in the side view of the insert piece 100 in **Fig. 3** is the thickness D of the connecting flange 110. The thickness D may measure, for example, between 1 mm and 7 mm, in particular between 3 mm and 5 mm, and preferably between 3.5 mm and 4.5 mm.

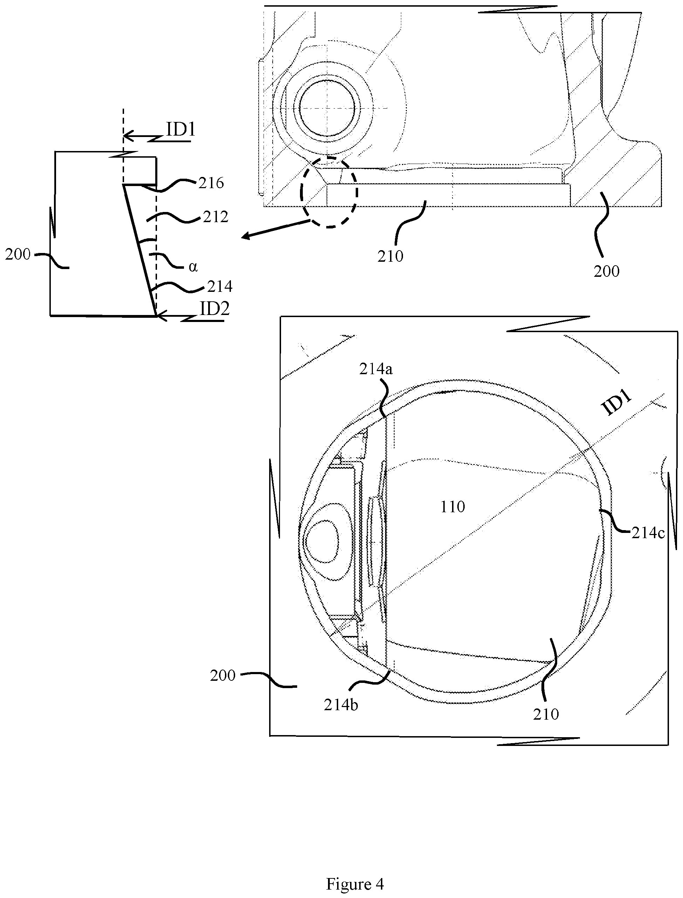

The conically-shaped retainer fitting may specifically interact with a correspondingly designed bypass in a turbine housing 200. A detail of a turbine housing 200 of this kind is shown in **Fig. 4** as well as in combination with an insert piece 100 in **Fig. 2****.** The turbine housing 200 comprises a bypass suitable for routing exhaust gas past a turbine wheel. Provided in this bypass is a passage opening 210 (see **Fig. 4**), which can be arranged within the insert piece 100. The edge of the passage opening 210 is thus designed in order to interact with the connecting flange 110 or the retainer fitting on the connecting flange 110. For this purpose, the edge of the passage opening 210 features an undercut 212, which is dimensioned to correspond with the conical circumferential surface 112 of the connecting flange 110. As shown in the detail enlargement at the left of **Fig. 4****,** the undercut 212 defines a funnel-shaped area 214 that interacts with the conical circumferential surface 112 of the connecting flange 110. The funnel-shaped area 214 then forms an angle with a corresponding reference line, which likewise runs parallel to the longitudinal axis 130, thus approximately the same angle α as that formed between the circumferential surface 112 of the connecting flange 110 and a parallel line 132 (see **Fig. 3** or **Fig. 4**). The undercut 212 furthermore defines a contact area 216 adjoining the funnel-shaped area 214. When the insert piece 100 is installed, the lateral surface 116 of the connecting flange 110 interacts with the contact area, with both surfaces facing each other. A second lateral surface 118 of the insert piece 100 can, for example, be used as a contact area on a manifold flange.

When the insert piece 100 has been inserted into the turbine housing 200 (the manufacturing process will be described in more detail hereinafter), the insert piece is no longer able to drop out. This is the result of geometry according to the invention in addition to the corresponding tolerances. Thus, a fit between the largest inner diameter ID1 of the passage opening 210 (see **Fig. 4****;** ID1 refers to the inner edge of the undercut) and the largest outer diameter AD (see **Fig. 3**) of the connecting flange 110 may have at least 0.001 mm of clearance, and in particular at least 0.002 mm of clearance. At the same time, a fit between the smallest inner diameter ID2 of the passage opening 210 (see **Fig. 4****;** ID2 refers to the outer edge of the undercut) and the largest outer diameter AD of the connecting flange 110 may have an overmeasure of at least 0.1 mm, and in particular an overmeasure of at least 0.15 mm. The insert piece 100 is prevented from dropping out and thus becoming lost in the turbine housing 200.

The non-rotating fitting, which is likewise provided on the connecting flange 110, will be described in more detail by referring again to **Fig. 3** as follows. An advantage of an anti-rotation fitting is that the insert piece 100 will no longer be able to rotate within the turbine housing following pre-assembly, during transport, and prior to the final assembly of the turbine housing 200 and the turbocharger. An anti-rotation fitting will likewise prevent rotation of the insert piece 100 during operation. The anti-rotation fitting example shown in **Fig. 3** is likewise designed as a geometric element. Three flattened areas 114a, 114b, and 114c are provided along the circumference of the connecting flange 110. In alternative embodiments, one, two or more than three flattened areas may likewise be provided. An anti-rotation fitting designed in this way is advantageous because it represents a very simple solution without the need for additional components, such as locking pins.

Like the retainer fitting, the anti-rotation fitting on the connecting flange 110 also interacts with the turbine housing 200. For this purpose, a corresponding anti-rotation fitting on the edge of the passage opening 210 is provided as a counterpart to the anti-rotation fitting on the connecting flange 110. As shown by the examples in **Fig. 3** and **Fig. 4****,** therefore, a number (three in the example shown) of corresponding flattened areas 218a, 218b, and 218c are provided along the edge of the passage opening 210 to conform with the number of flattened areas 114a, 114b, and 114c provided on the connecting flange 110.

Referring again to **Fig. 3****,** it is evident that the tubular portion 120 projects out from the first lateral surface 116. A peripheral contact area 140 is provided for a regulating flap 300 at a first end of the tubular portion 120 (see **Fig. 2**)**.** The connecting flange 110 is arranged on the second end of the tubular portion 120. In addition, the first end of the tubular portion 120 is formed at an oblique angle. In the example shown in **Fig. 3****,** the first end is formed at an oblique angle such that an angle β of less than 90 degrees is formed between the plane along which the contact area 140 lies and the longitudinal axis 130. The oblique design of the end of the tubular portion can be adapted in accordance with the geometry of and the space available within the turbine housing as well as the flap type and the flow conditions.

The material chosen for the insert piece 100 will preferably be heat-resistant while also demonstrating good resistance to corrosion and oxidation at high temperatures. Special alloys can be used for this purpose, for example the nickel alloy having material number 2.4632.

In summary, the following advantages will result from the insert piece 100 according to the invention or from a turbine housing arrangement consisting of the insert piece 100 and the turbine housing 200: Without using additional components, both the loss of and the rotation of the insert piece 100 are prevented. This saves both time and cost, because the customer or end user only has to install a single part (the previously assembled turbine housing 200 and insert piece 100), and the manufacturer only has to send a single part. Furthermore, given that the insert piece will remain in its correctly installed position following the installation process, this also ensures that the insert piece 100 will perform its function inside the turbine housing 200.

The invention furthermore includes a turbocharger having a turbine housing and an insert piece as previously described.

An inventive method for manufacturing a turbine housing arrangement according to the invention will be described as follows. The method includes the following steps: a turbine housing 200 having a bypass that features a passage opening 210 must first be manufactured and/or provided. An insert piece 100 must likewise be manufactured and/or provided in accordance with one of the previously described embodiments. The turbine housing 200 must then be heated and/or the insert piece 100 cooled. Given a sufficient temperature difference, the insert piece 100 can then be inserted into the passage opening 210 of the bypass.

The method may furthermore include the step of creating an undercut 212 on the edge of the passage opening 210 prior to heating the turbine housing 200. The heating of the turbine housing or the cooling of the insert piece 100 can be adapted according to the design of the turbine housing 200. It may thus be the case that additional components will be provided within the turbine housing which, for example, may be heated to not above 150°C, to not above 200°C, or to not above 300°C. The insert piece may then be cooled to a greater or lesser degree accordingly (using liquid nitrogen, for example). For instance, the turbine housing 200 may be heated and/or the insert piece 100 cooled so that the temperature difference between the turbine housing 200 and the insert piece 100 is at least 300°C, in particular at least 340°C, and preferably at least 346°C. These values may be adjusted according to the clearances provided (between ID1 and AD or between ID2 and AD) as well as the materials used for the turbine housing 200 and the insert piece 200.

## Claims

1. Insert piece (100) for a bypass in a turbine housing (200) having
a connecting flange (110) that is suitable for joining the insert piece (100) with a turbine housing (200), and
a tubular portion (120) that is designed so that exhaust gas can be routed through the insert piece (100),
**characterized in that** the connecting flange (110) furthermore comprises a retainer fitting, and
**in that** the connecting flange (110) is designed in the form of an annular ring, and the retainer fitting is provided in the form of a conical circumferential surface (112) on the connecting flange (110).

2. Insert piece according to claim 1, **characterized in that** the retainer fitting is configured as a geometric element, in particular in the area of the edge of the connecting flange (110).

3. Insert piece according to claim 1, **characterized in that** an angle (α) is formed between the circumferential surface (112) of the connecting flange (110) and a line (132) parallel to a longitudinal axis (130) passing through the tubular portion (120), said angle measuring between 0.1 degrees and 5 degrees, in particular between 0.5 degrees and 2 degrees, and preferably between 0.8 degrees and 1.2 degrees.

4. Insert piece according to any of the preceding claims, **characterized in that** the connecting flange (110) comprises an anti-rotation fitting.

5. Insert piece according to claim 4, **characterized in that** the anti-rotation fitting is provided in the form of at least one flattened area (114a, 114b, 114c) along the circumference of the connecting flange (110).

6. Insert piece according to claim 4, **characterized in that** the anti-rotation fitting is provided in the form of at least three flattened areas (114a, 114b, 114c) along the circumference of the connecting flange (110).

7. Turbine housing arrangement for a turbocharger having a
turbine housing (200), wherein the turbine housing 200 comprises a bypass suitable for routing exhaust gas past a turbine wheel;
**characterized in that**, arranged within the bypass is an insert piece (100) according to any of the preceding claims.

8. Turbine housing arrangement according to claim 7, **characterized in that** an edge of a passage opening (210) is designed in order to interact with the connecting flange (110), in particular with the retainer fitting of the connecting flange (110).

9. Turbine housing arrangement according to claim 8, **characterized in that** the edge of the passage opening (210) features an undercut (212), in particular wherein the undercut (212) is dimensioned to correspond with the conical circumferential surface (112) of the connecting flange (110).

10. Turbine housing arrangement according to claim 9, **characterized in that** the undercut (212) defines a funnel-shaped area (214), which interacts with the conical circumferential surface (112) of the connecting flange (110), and defines a contact area (216), which interacts with a lateral surface (116) of the connecting flange (110).

11. Turbine housing arrangement according to any of the claims 7 to 10, **characterized in that** the edge of the passage opening (210) features at least one non-rotating fitting as a counterpart to the non-rotating fitting on the connecting flange (110), wherein a number of corresponding flattened areas (214a, 214b, and 214c) are provided along said edge to conform with the number of flattened areas (114a, 114b, and 114c) provided on the connecting flange (110).

12. Turbine housing arrangement according to any of the claims 8 to 11, **characterized in that** a fit between the largest inner diameter (ID1) of the passage opening (210) and the largest outer diameter (AD) of the connecting flange (110) may have at least 0.001 mm of clearance.

13. Turbine housing arrangement according to any of the claims 8 to 12, **characterized in that** a fit between the smallest inner diameter (ID2) of the passage opening (210) and the largest outer diameter (AD) of the connecting flange (110) may have an overmeasure of at least 0.1 mm, and in particular an overmeasure of at least 0.15 mm.

14. Turbocharger having a turbine housing arrangement according to any of the preceding claims 7 to 13.

15. Method for manufacturing a turbine housing arrangement, including:
manufacturing and/or providing a turbine housing (200) having a bypass that features a passage opening (210);
, **characterized in that** the method further includes manufacturing and/or providing an insert piece (100) according to any of the claims 1 to 6;
heating the turbine housing (200) and/or cooling the insert piece (100);
inserting the insert piece (100) into the passage opening (210) of the bypass.

## Patentansprüche

1. Einsatzstück (100) für einen Bypass in einem Turbinengehäuse (200) mit:
einem Verbindungsflansch (110), der dazu geeignet ist, das Einsatzstück (100) mit einem Turbinengehäuse (200) zu verbinden, und
einem rohrförmigen Abschnitt (120), der so ausgelegt ist, dass Abgas durch das Einsatzstück (100) geleitet werden kann,
**dadurch gekennzeichnet, dass** der Verbindungsflansch (110) ferner einen Halterungsanschluss umfasst, und
dass der Verbindungsflansch (110) in Form eines Ringes ausgelegt ist und der Halterungsanschluss in Form einer konischen Umfangsfläche (112) am Verbindungsflansch (110) vorgesehen ist.

2. Einsatzstück gemäß Anspruch 1, **dadurch gekennzeichnet, dass** der Halterungsanschluss als ein geometrisches Element, insbesondere im Bereich des Randes des Verbindungsflansches (110), ausgelegt ist.

3. Einsatzstück gemäß Anspruch 1, **dadurch gekennzeichnet, dass** zwischen der Umfangsfläche (112) des Verbindungsflansches (110) und einer Linie (132) parallel zu einer durch den rohrförmigen Abschnitt (120) verlaufenden Längsachse (130) ein Winkel (a) gebildet ist, der zwischen 0,1 Grad und 5 Grad, insbesondere zwischen 0,5 Grad und 2 Grad, vorzugsweise zwischen 0,8 Grad und 1,2 Grad, beträgt.

4. Einsatzstück gemäß einem der vorhergehenden Ansprüche, **dadurch gekennzeichnet, dass** der Verbindungsflansch (110) eine Verdrehsicherung umfasst.

5. Einsatzstück gemäß Anspruch 4, **dadurch gekennzeichnet, dass** die Verdrehsicherung in Form von mindestens einer abgeflachten Fläche (114a, 114b, 114c) entlang des Umfangs des Verbindungsflansches (110) vorgesehen ist.

6. Einsatzstück gemäß Anspruch 4, **dadurch gekennzeichnet, dass** die Verdrehsicherung in Form von mindestens drei abgeflachten Flächen (114a, 114b, 114c) entlang des Umfangs des Verbindungsflansches (110) vorgesehen ist.

7. Turbinengehäuseanordnung für einen Turbolader mit einem Turbinengehäuse (200), wobei das Turbinengehäuse (200) einen Bypass umfasst, der dazu geeignet ist, Abgas an einem Turbinenrad vorbeizuleiten;
**dadurch gekennzeichnet, dass** innerhalb des Bypasses ein Einsatzstück (100) gemäß einem der vorhergehenden Ansprüche angeordnet ist.

8. Turbinengehäuseanordnung gemäß Anspruch 7, **dadurch gekennzeichnet, dass** ein Rand einer Durchgangsöffnung (210) ausgelegt ist, um mit dem Verbindungsflansch (110), insbesondere mit dem Halterungsanschluss des Verbindungsflansches (110), zusammenzuwirken.

9. Turbinengehäuseanordnung gemäß Anspruch 8, **dadurch gekennzeichnet, dass** der Rand der Durchgangsöffnung (210) eine Hinterschneidung (212) aufweist, insbesondere wobei die Hinterschneidung (212) entsprechend der konischen Umfangsfläche (112) des Verbindungsflansches (110) bemessen ist.

10. Turbinengehäuseanordnung gemäß Anspruch 9, **dadurch gekennzeichnet, dass** die Hinterschneidung (212) einen trichterförmigen Bereich (214) definiert, der mit der konischen Umfangsfläche (112) des Verbindungsflansches (110) zusammenwirkt, und einen Kontaktbereich (216) definiert, der mit einer Seitenfläche (116) des Verbindungsflansches (110) zusammenwirkt.

11. Turbinengehäuseanordnung gemäß einem der Ansprüche 7 bis 10, **dadurch gekennzeichnet, dass** der Rand der Durchgangsöffnung (210) mindestens ein drehfestes Anschlussstück als Gegenstück zu dem drehfesten Anschlussstück am Verbindungsflansch (110) aufweist, wobei entlang dieses Randes eine Anzahl entsprechender abgeflachter Bereiche (214a, 214b und 214c) vorgesehen ist, die mit der Anzahl der am Verbindungsflansch (110) vorgesehenen abgeflachten Bereiche (114a, 114b und 114c) übereinstimmen.

12. Turbinengehäuseanordnung gemäß einem der Ansprüche 8 bis 11, **dadurch gekennzeichnet, dass** eine Passung zwischen dem größten Innendurchmesser (ID1) der Durchgangsöffnung (210) und dem größten Außendurchmesser (AD) des Verbindungsflansches (110) ein Spiel von mindestens 0,001 mm aufweisen kann.

13. Turbinengehäuseanordnung gemäß einem der Ansprüche 8 bis 12, **dadurch gekennzeichnet, dass** eine Passung zwischen dem kleinsten Innendurchmesser (ID2) der Durchgangsöffnung (210) und dem größten Außendurchmesser (AD) des Verbindungsflansches (110) ein Übermaß von mindestens 0,1 mm, insbesondere ein Übermaß von mindestens 0,15 mm aufweisen kann.

14. Turbolader mit einer Turbinengehäuseanordnung gemäß einem der vorhergehenden Ansprüche 7 bis 13.

15. Verfahren zum Herstellen einer Turbinengehäuseanordnung, das beinhaltet:
Herstellen und/oder Bereitstellen eines Turbinengehäuses (200) mit einem Bypass, der eine Durchgangsöffnung (210) aufweist;
**dadurch gekennzeichnet, dass** das Verfahren ferner beinhaltet:
Herstellen und/oder Bereitstellen eines Einsatzstücks (100) gemäß einem der Ansprüche 1 bis 6;
Erhitzen des Turbinengehäuses (200) und/oder Kühlen des Einsatzstücks (100);
Einsetzen des Einsatzstücks (100) in die Durchgangsöffnung (210) des Bypasses.

## Revendications

1. Pièce d'insertion (100) pour une dérivation dans un carter de turbine (200) ayant
une bride de raccordement (110) qui convient pour relier la pièce d'insertion (100) à un carter de turbine (200), et
une partie tubulaire (120) qui est conçue de sorte à ce que le gaz d'échappement puisse être acheminé à travers la pièce d'insertion (100),
**caractérisée en ce que** la bride de raccordement (110) comprend en outre un raccord de retenue, et
**en ce que** la bride de raccordement (110) est conçue sous la forme d'une bague annulaire, et le raccord de retenue est fourni sous la forme d'une surface circonférentielle conique (112) sur la bride de raccordement (110).

2. Pièce d'insertion selon la revendication 1, **caractérisée en ce que** le raccord de retenue est conçu comme un élément géométrique, en particulier dans la zone du bord de la bride de raccordement (110).

3. Pièce d'insertion selon la revendication 1, **caractérisée en ce qu'**un angle (a) est formé entre la surface circonférentielle (112) de la bride de raccordement (110) et une ligne (132) parallèle à un axe longitudinal (130) passant par la partie tubulaire (120), ledit angle mesurant entre 0,1 degré et 5 degrés, en particulier entre 0,5 degré et 2 degrés, et de préférence entre 0,8 degré et 1,2 degré.

4. Pièce d'insertion selon l'une quelconque des revendications précédentes, **caractérisée en ce que** la bride de raccordement (110) comprend un raccord anti-rotation.

5. Pièce d'insertion selon la revendication 4, **caractérisée en ce que** le raccord anti-rotation est fourni sous la forme d'au moins une zone aplatie (114a, 114b, 114c) le long de la circonférence de la bride de raccordement (110).

6. Pièce d'insertion selon la revendication 4, **caractérisée en ce que** le raccord anti-rotation est fourni sous la forme d'au moins trois zones aplaties (114a, 114b, 114c) le long de la circonférence de la bride de raccordement (110).

7. Agencement de carter de turbine pour turbocompresseur ayant
un carter de turbine (200), le carter de turbine (200) comprenant une dérivation appropriée pour acheminer le gaz d'échappement au-delà d'une roue de turbine ;
**caractérisé en ce que**, disposée à l'intérieur de la dérivation se trouve une pièce d'insertion (100) selon l'une quelconque des revendications précédentes.

8. Agencement de carter de turbine selon la revendication 7, **caractérisé en ce qu'**un bord d'une ouverture de passage (210) est conçu pour interagir avec la bride de raccordement (110), en particulier avec le raccord de retenue de la bride de raccordement (110).

9. Agencement de carter de turbine selon la revendication 8, **caractérisé en ce que** le bord de l'ouverture de passage (210) présente une contre-dépouille (212), la contre-dépouille (212) étant notamment dimensionnée pour correspondre à la surface périphérique conique (112) de la bride de raccordement (110).

10. Agencement de carter de turbine selon la revendication 9, **caractérisé en ce que** la contre-dépouille (212) définit une zone en forme d'entonnoir (214), qui interagit avec la surface circonférentielle conique (112) de la bride de raccordement (110), et définit une zone de contact (216), qui interagit avec une surface latérale (116) de la bride de raccordement (110).

11. Agencement de carter de turbine selon l'une quelconque des revendications 7 à 10, **caractérisé en ce que** le bord de l'ouverture de passage (210) présente au moins un raccord non rotatif comme contrepartie du raccord non rotatif sur la bride de raccordement (110), un certain nombre de zones aplaties (214a, 214b, et 214c) correspondantes étant situées le long dudit bord pour se conformer au nombre de zones aplaties (114a, 114b, et 114c) situées sur la bride de raccordement (110).

12. Agencement de carter de turbine selon l'une quelconque des revendications 8 à 11, **caractérisé en ce qu'**un ajustement entre le plus grand diamètre intérieur (ID1) de l'ouverture de passage (210) et le plus grand diamètre extérieur (AD) de la bride de raccordement (110) peut avoir au moins 0,001 mm de jeu.

13. Agencement de carter de turbine selon l'une quelconque des revendications 8 à 12, **caractérisé en ce qu'**un ajustement entre le plus petit diamètre intérieur (ID2) de l'ouverture de passage (210) et le plus grand diamètre extérieur (AD) de la bride de raccordement (110) peut avoir une surmesure d'au moins 0,1 mm, et en particulier une surmesure d'au moins 0,15 mm.

14. Turbocompresseur ayant un agencement de carter de turbine selon l'une quelconque des revendications précédentes 7 à 13.

15. Procédé de fabrication d'un agencement de carter de turbine, incluant l'étape consistant à :
fabriquer et/ou fournir un carter de turbine (200) ayant une dérivation qui présente une ouverture de passage (210) ;
**caractérisé en ce que** le procédé incluant en outre les étapes consistant à
fabriquer et/ou fournir une pièce d'insertion (100) selon l'une quelconque des revendications 1 à 6 ;
chauffer le carter de turbine (200) et/ou refroidir la pièce d'insertion (100) ;
insérer la pièce d'insertion (100) dans l'ouverture de passage (210) de la dérivation.
